# EUROPEAN PATENT SPECIFICATION

(11) **EP 0 950 158 B1**
(45) Date of publication and mention of the grant of the patent: **21.02.2001**
(21) Application number: 97913338.6
(22) Date of filing: 25.11.1997
(51) Int. Cl.: F16T 1/38, F16K 39/02

(54) **VALVE ASSEMBLY**
VENTILANORDNUNG
ENSEMBLE SOUPAPE

(30) Priority: 18.12.1996 GB 9626258
(43) Date of publication of application: 20.10.1999
(73) Proprietor: SPIRAX-SARCO LIMITED, Cheltenham, Gloucestershire GL50 3EN (GB)
(72) Inventor: NEEDHAM, Edward, Grant, Brundan, Gloucestershire GL53 7EA (GB)
(74) Representative: Cheyne, John Robert Alexander Mackenzie
(86) International application number: GB9703224
(87) International publication number: WO9827379

(56) References cited:
- BE-A- 336 683
- GB-A- 774 561

## Description

This invention relates to a valve assembly, particularly, although not exclusively, to a valve assembly for use in steam traps such as float traps.

Steam traps are used to remove condensate and often air and other incondensible gases from steam systems without the loss of live steam. The condensate can then be returned to the boiler. Float traps use a float to operate a condensate discharge valve by way of an actuating arm. The float is moved as the condensate level within the steam trap rises. Sufficient increase in the condensate level causes the float to open the discharge valve to allow some of the condensate to be discharged from the trap.

The performance of a float trap is governed by the size of the trap since the work available to open the discharge valve in such a float trap is determined by the size of the float, the length of the actuating lever used to operate the valve and the distance over which the float can move. The work available from the float (the flotation force or up-thrust applied by the condensate multiplied by the distance over which the float can move) must be high enough to uncover the seat of the valve assembly (closing force multiplied by the distance required to uncover the seat fully). For the valve to be opened by the float, the up-thrust exerted on the float multiplied by any leverage must be sufficient to open the valve against the pressure force acting on the closure member of the valve. However as the valve moves away from the seat the force required to move the valve diminishes, whereas the float is still able to generate the original magnitude of force. Thus work is wasted in conventional types of steam trap valve assembly.

GB-A-774561 discloses an inverted bucket trap including a valve assembly comprising a main seat, an intermediate seat pivotable about a first axis into engagement with the main seat and a closure member pivotable about a second axis into engagement with the intermediate seat.

According to a first aspect of the present invention there is provided a valve assembly comprising a valve seat having a flow passage, and closure means which is pivotable with respect to the valve seat and movable by an operating member into and out of engagement with the valve seat to close and open the flow passage, the valve seat comprising a main seat element having a main flow passage, and an intermediate seat element which is pivotable about an axis with respect to the main seat element and which has an intermediate passage communicating with the main flow passage, the operating member being pivotable, about said axis, with respect to the main valve seat from a closed position of the valve assembly to open the valve assembly, wherein, during a first part of the movement of the operating member, the closure means is withdrawn from the intermediate valve seat and, during a second part of the movement of the operating member, the intermediate valve seat is withdrawn from the main valve seat.

According to a second aspect of the present invention there is provided a condensate trap including such a valve assembly.

A portion of the intermediate valve seat may have an abutment surface which is engagable with the operating member during the second part of the movement.

In such an assembly a clearance may be provided between the abutment face and the operating member when the valve is closed.

The operating member preferably carries a float.

For a better understanding of the present invention, and to show more clearly how it may be carried into effect, reference will now be made, by way of example, to the accompanying drawings, in which:-
Figure 1 is a sectioned side view of a ball float steam trap; and
Figure 2 is an enlarged sectioned side view of a valve assembly of the float trap of Figure 1; and

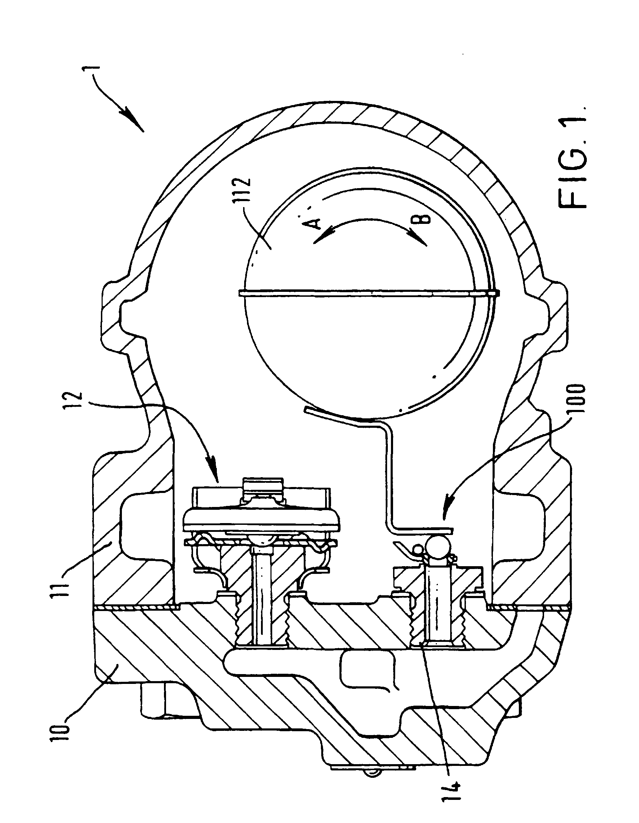

Figure 1 shows a steam trap 1 comprising a housing assembled from housing parts 10 and 11. The housing has an inlet (not shown) and an outlet 14. Flow through the outlet is controlled by a valve assembly 100. The steam trap 1 also includes an air vent 12 of conventional design for discharging air from the housing on start-up. The condensate valve assembly 100 operates to discharge condensate from the steam trap when the condensate level rises above a certain level.

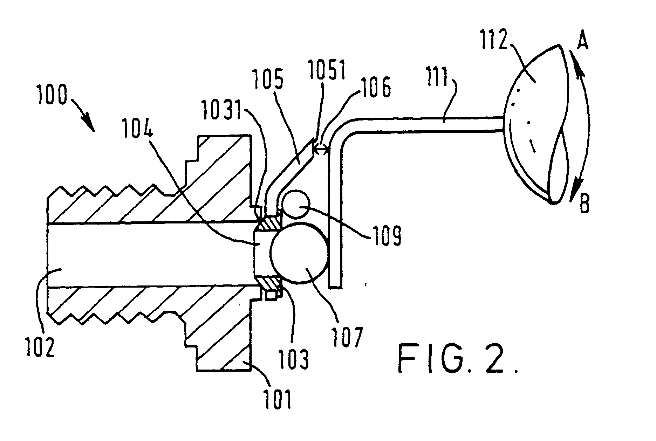

The condensate valve assembly 100 is shown in more detail in Figure 2 in a closed position. The assembly has a valve seat comprising a main seat element 101 having an aperture 102 through which condensate is discharged. The aperture 102 opens into the outlet 14. The valve seat also comprises an intermediate seat element 103, having a conical seating face 1031 and an aperture 104 which communicates with the aperture 102. An actuating member 105 extends from one side of the intermediate seat element 103 and is pivotally attached to the body of steam trap about movement of a pivot 109. A valve closure member or clack 107 engages the intermediate seat element 103, which itself engages the main set element 101, so as to close the apertures 102 and 104.

An operating member in the form of a lever 111 carries a float 112 at one end thereof and is pivotally mounted on the pivot 109 for rotation separately from the actuating member 105. The clack 107 is secured to the lever 111 at the end away from the float 112 for pivotal movement with respect to the valve seat 103.

In the condition shown in Figure 1, the condensate (not shown) within the steam trap 1 is at a low level and the weight of the float 112 acts through the lever 111 on the valve closure member 107 keeping the valve closed.

The inlet of steam trap is connected to a steam line, and steam and condensate pass into the housing. As the condensate level within the steam trap 1 rises, the up-thrust on the float 112 increases, and an increasing force is applied by the lever 111 to the clack 107 in the direction away from the seat element 103. Initially, this force is resisted by steam pressure within the housing, which tends to keep the valve closed. Eventually, however, the up-thrust on the float 112 reaches a sufficient level to overcome the steam pressure, and the float 112 moves in a direction shown in arrow A in Figures 1 and 2, thereby rotating the actuating lever 111 about the pivot 109. This pivoting action withdraws the clack 107 away from the intermediate seat 103, opening the intermediate aperture 104 and eliminating the pressure drop across the clack 107.

As a result, the force required to move the clack 107 to the right as seen in Figures 1 and 2 rapidly diminishes. Continued upwards movement of float 112 takes up the clearance 106 (Figure 2) so as to bring the lever 111 into contact with an abutment surface 1051 on the end of the intermediate seat actuating member 105. The movement of the main actuating arm 111 against the intermediate actuating member 105 causes the intermediate seat 103 to rotate about the pivot 109, and move away from the main seat 101. The main outlet aperture 102 is thereby fully opened to allow a greater discharge flow rate of condensate from the steam trap.

This two-part movement of the valve assembly enables the high level of up-thrust generated initially by the float to be used solely to overcome the steam pressure within the trap, and uses the extended movement of the float when the pressure has been overcome to enlarge the discharge aperture by moving the intermediate seat.

With this construction, the relatively small flow cross-section of the intermediate aperture 104 results in a relatively low pressure difference across the clack 107. Consequently, a relatively low force on the clack 107 is sufficient to move it away from the intermediate seat element 103. Nevertheless, withdraw of the intermediate seat element 103 exposes the full flow cross-section of the main aperture 102 allowing rapid discharge of the condensate.

As the condensate level in the steam trap subsides the float 112 moves in the direction of arrow B, thereby allowing the intermediate seat element 103 to rotate abut the pivot 109 back into contact with the main seat element 101. The clack is also urged towards the main seat 101, until it abuts against the intermediate seat 104 so that the valve is closed and the condensate discharge stopped.

The main discharge aperture 102 may, for example, have a flow cross-section area which is double that of the intermediate aperture 104.

A valve assembly shown in the Figures may provide a performance improvement of approximately 50% over corresponding valve assemblies having only a single valve seat element (i.e. without the intermediate seat element 103). This performance increase may be represented by an increase in the flow cross-sectional area of the main aperture 102, so increasing the discharge rate when the valve is open, and/or by an increase in pressure rating i.e. the steam pressure within the housing which can be overcome by the action of the float 112 to open the valve.

## Claims

1. A valve assembly comprising a valve seat having a flow passage, and closure means which is pivotable with respect to the valve seat and movable by an operating member into and out of engagement with the valve seat to close and open the flow passage, the valve seat comprising a main seat element having a main flow passage, and an intermediate seat element which is pivotable about an axis with respect to the main seat element and which has an intermediate passage communicating with the main flow passage, the operating member being pivotable, about said axis, with respect to the main valve seat from a closed position of the valve assembly to open the valve assembly, wherein, during a first part of the movement of the operating member, the closure means is withdrawn from the intermediate valve seat and, during a second part of the movement of the operating member, the intermediate valve seat is withdrawn from the main valve seat.

2. A valve assembly as claimed in claim 1,
wherein a portion of the intermediate valve seat has an abutment surface which is engagable with the operating member during the second part of the movement.

3. A valve assembly as claimed in claim 2,
wherein a clearance is provided between the abutment face and the operating member when the valve is closed.

4. A valve assembly as claimed in claim 1, 2 or 3, wherein the operating member carries a float.

5. A condensate trap comprising a float chamber having an inlet, and an outlet which is controlled by a valve assembly as claimed in any one of the preceding claims.

## Patentansprüche

1. Ventilanordnung, die einen Ventilsitz, der einen Durchflusskanal hat, und ein Verschlussmittel umfasst, das in bezug auf den Ventilsitz drehbar und durch ein Betätigungsglied in Eingriff und außer Eingriff mit dem Ventilsitz bewegbar ist, um den Durchflusskanal zu verschließen und zu öffnen, wobei der Ventilsitz ein Hauptsitzelement, das einen Hauptdurchflusskanal hat, und ein Zwischensitzelement umfasst, das in bezug auf das Hauptsitzelement um eine Achse drehbar ist und einen Zwischenkanal hat, der mit dem Hauptdurchflusskanal in Verbindung steht, welches Betätigungsglied in bezug auf den Hauptventilsitz aus einer geschlossenen Stellung der Ventilanordnung um die Achse drehbar ist, um die Ventilanordnung zu öffnen, wobei das Verschlussmittel während eines ersten Teils der Bewegung des Betätigungsglieds von dem Zwischenventilsitz zurückgezogen wird und während eines zweiten Teils der Bewegung des Betätigungsglieds der Zwischenventilsitz von dem Hauptventilsitz zurückgezogen wird.

2. Ventilanordnung nach Anspruch 1, wobei ein Teil des Zwischenventilsitzes eine Anschlagfläche hat, die während des zweiten Teils der Bewegung in Eingriff mit dem Betätigungsglied kommt.

3. Ventilanordnung nach Anspruch 2, wobei zwischen der Anschlagfläche und dem Betätigungsglied ein Zwischenraum vorgesehen ist, wenn das Ventil geschlossen ist.

4. Ventilanordnung nach Anspruch 1, 2 oder 3, wobei das Betätigungsglied einen Schwimmer trägt.

5. Kondensat-Ableiter, der eine Schwimmerkammer umfasst, die einen Einlass und einen Auslass hat, der durch eine Ventilanordnung nach einem der vorhergehenden Ansprüche gesteuert wird.

## Revendications

1. Ensemble formant soupape comprenant un siège de soupape présentant un passage d'écoulement, et des moyens de fermeture qui peuvent pivoter par rapport au siège de soupape et qui sont susceptibles d'être déplacés par un élément fonctionnel pour venir coopérer ou cesser de coopérer avec le siège de soupape pour fermer et ouvrir le passage d'écoulement, le siège de soupape comprenant un élément de siège principal présentant un passage d'écoulement principal, et un élément de siège intermédiaire qui est susceptible de pivoter autour d'un axe, par rapport à l'élément de siège principal, et qui présente un passage intermédiaire communicant avec le passage d'écoulement principal, l'élément fonctionnel étant susceptible de pivoter, autour de l'axe, par rapport au siège de soupape principal, à partir d'une position fermée de l'ensemble formant soupape, pour ouvrir l'ensemble formant soupape, les moyens de fermeture, au cours d'une première partie du déplacement de l'élément fonctionnel, étant retirés du siège de soupape intermédiaire et, au cours d'une deuxième partie du déplacement de l'élément fonctionnel, le siège de soupape intermédiaire étant retiré du siège de soupape principal.

2. Ensemble formant soupape selon la revendication 1, dans lequel une partie du siège de soupape intermédiaire présente une surface de butée qui est susceptible de coopérer avec l'élément fonctionnel au cours de la deuxième partie du déplacement.

3. Ensemble formant soupape selon la revendication 2, dans lequel un dégagement est prévu entre la face de butée et l'élément fonctionnel lorsque la soupape est fermée.

4. Ensemble formant soupape selon la revendication 1, 2 ou 3, dans lequel l'élément fonctionnel porte un flotteur.

5. Piège à condensat comprenant une cuve à niveau constant possédant une entrée et une sortie qui est commandée par un ensemble formant soupape selon l'une quelconque des revendications précédentes.
